# EUROPÄISCHE PATENTSCHRIFT

(11) **EP 1 837 256 B1**
(45) Veröffentlichungstag und Bekanntmachung des Hinweises auf die Patenterteilung: **13.06.2012**
(21) Anmeldenummer: 07101623.2
(22) Anmeldetag: 02.02.2007
(51) Int. Cl.: B60S 1/08, B60S 1/34, B60S 1/58

(54) **Scheibenwischerantriebsanordnung**
Windscreen wiper drive assembly
Dispositif d'engrenage d'essuie-glace

(30) Priorität: 24.03.2006 DE 102006013696
(43) Veröffentlichungstag der Anmeldung: 26.09.2007
(73) Patentinhaber: ROBERT BOSCH GMBH, 70442 Stuttgart (DE)
(72) Erfinder: Albrecht, Gerard, 67690, Hatten (FR); Bohn, Roland, 77815, Buehl (DE); Friderichs, Guenther, 77836, Schwarzach (DE); Lipps, Verena, 76534, Baden-Baden (DE); Geubel, Paul, 76534, Baden-Baden (DE); Reith, Michael, 77815, Buehl (DE)

(56) Entgegenhaltungen:
- DE-A1- 4 322 429
- JP-A- 2000 071 941
- JP-A- 2001 225 726

## Beschreibung

Die Erfindung betrifft eine Scheibenwischeranordnung gemäß dem Oberbegriff des Anspruchs 1.

### Stand der Technik

Die DE 299 01 686 U1 zeigt eine Scheibenwischerantriebs-anordnung mit einem in einem Motorgehäuse angeordneten elektrischen Antriebsmotor, dessen Ankerwelle mit einem in einem Getriebegehäuse angeordneten Getriebe verbunden ist. Aus dem Getriebegehäuse mündet eine Antriebswelle zum pendelnden Antrieb eines mit der Antriebswelle verbundenen Wischerarms heraus. Üblicherweise ist die Antriebswelle von einer Schutzhülse umgeben, die auf einen Befestigungsdom des Getriebegehäuses aufgeschoben ist. Die Schutzhülse ist einerseits mittels eines innen liegenden Dichtelements, insbesondere eines 0-Rings, gegenüber der Antriebswelle abgedichtet, wodurch ein Eindringen von Wasser in den Bereich zwischen Schutzhülse und Antriebswelle und damit in das Getriebegehäuse hinein vermieden wird. Ferner ist ein äußeres Dichtelement vorgesehen, mit dem die Schutzhülse gegenüber dem Rand der Durchtrittsöffnung für die Antriebswelle in dem Fahrzeugbauteil abgedichtet ist, so dass in dem Bereich zwischen dem Rand der Durchtrittsöffnung und der Schutzhülse kein Wasser von außen eindringen kann. Nachteilig bei der bekannten Anordnung der Schutzhülse ist es, dass diese sich bei unsachgemäßer Montage oder Demontage oder durch ständige Rüttelbewegungen während des Fahrbetriebs von ihrem Presssitz auf dem Befestigungsdom des Getriebegehäuses lösen kann, wodurch die Gefahr besteht, dass sich die Schutzhülse in Bezug auf ihre Dichtelemente verkantet und so keine ausreichende Dichtigkeit mehr gegeben ist. Hierdurch kann es zum Wassereintritt in das Getriebegehäuse sowie das Motorgehäuse und damit zu Fehlfunktionen und elektrischen Kurzschlüssen kommen.

Aus der JP-A 2000-071941 ist eine Scheibenwischerantriebsanordnung mit einer Antriebswelle bekannt, die von einer Schutzhülse umschlossen ist, wobei die Antriebswelle über ein Dichtelement gegenüber einem Fahrzeugbauteil abgedichtet ist. Die Schutzhülse ist über ein ringförmiges Sicherungselement an der Antriebswelle gehalten, das sich somit der umgreifenden Schutzhülse befindet.

### Offenbarung der Erfindung

### Technische Aufgabe

Der Erfindung liegt die Aufgabe zugrunde, eine verbesserte Scheibenwischerantriebsanordnung anzugeben, bei der das Risiko eines Wassereintritts vermindert wird.

### Technische Lösung

Diese Aufgabe wird mit den Merkmalen des Anspruchs 1 gelöst.

Vorteilhafte Weiterbildungen der Erfindung sind in den Unteransprüchen angegeben.

Der Erfindung liegt der Gedanke zugrunde, zusätzlich oder alternativ zur Abstützung der Schutzhülse an dem Getriebegehäuse mindestens ein Sicherungselement vorzusehen, welches sich an der Antriebswelle abstützt oder einstückig mit der Antriebswelle ausgebildet ist, an dem sich die Schutzhülse in axialer Richtung abstützen kann, wodurch eine axiale Verschiebung der Schutzhülse relativ zu der Antriebswelle mit Vorteil vermieden wird, wodurch die Gefahr einer undefinierten Lage Dichtelemente erheblich reduziert wird. Je nach dem, ob die Schutzhülse unmittelbar an dem Sicherungselement anliegt oder ob ein minimales Axialspiel vorgesehen ist, wird die axiale Verschieblichkeit vollständig unterbunden oder auf einen minimalen axialen Weg begrenzt.

Bezüglich der Realisierung der axialen Festlegung der Schutzhülse bzw. der Begrenzung des axialen Verschiebeweges der Schutzhülse relativ zu der Antriebswelle gibt es unterschiedliche Möglichkeiten.

Es ist mindestens ein Sicherungselement vorgesehen, das sich in axialer Richtung an der Antriebswelle abstützt oder einstückig mit dieser ausgebildet ist. Hierzu eignet sich insbesondere eine Speed-Nut. Mit dem gegenüberliegenden Bereich ist die Schutzhülse sich an dem Getriebegehäuse der Scheibenwischerantriebsanordnung, bevorzugt an einem Befestigungsdom, abstützend angeordnet und mittels eines separaten Fixierelementes mit dem Getriebegehäuse befestigt. Mit Vorteil ist die Schutzhülse derart an dem Getriebegehäuse festgelegt, insbesondere formschlüssig mit diesem verbunden, dass ein Verdrehen der Schutzhülse vermieden wird. Gemäß einer vorteilhaften Ausgestaltung der Erfindung ist die Schutzhülse auf den Befestigungsdom des Getriebegehäuses in axialer Richtung aufgepresst. Zusätzlich oder alternativ ist es sinnvoll, die Schutzhülse mit dem Getriebegehäuse zu verzahnen und/oder zu verrasten und/oder zu verstemmen und/oder zu vernieten und/oder zu verkleben und/oder mittels einer Doppel-Speed-Nut zu sichern. Die Doppel-Speed-Nut wird bevorzugt derart angeordnet, dass sie sich mit radial äußeren Laschen oder Krallen am Innenumfang der Schutzhülse und mit radial inneren Laschen oder Krallen an dem Befestigungsdom des Getriebegehäuses festhält.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
- Fig. 1: eine geschnittene Darstellung einer Scheibenwischeranordnung mit einer Schützhülse, die zwischen zwei axial beabstandeten, sich an einer Antriebswelle abstützenden Sicherungselementen aufgenommen ist,
- Fig. 2: eine Speed-Nut,
- Fig. 3: einen Sicherungsring,
- Fig. 4: eine Scheibenwischerantriebsanordnung, bei der die Schutzhülse sich mit einer Stirnseite an einem Sicherungselement abstützt, welches an der Antriebswelle gehalten ist und mit dem gegenüberliegenden Ende an einem Getriebegehäuse gehalten ist,
- Fig. 5: eine Verrastungsmöglichkeit der Schutzhülse mit dem Getriebegehäuse,
- Fig. 6: eine mit dem Getriebegehäuse verstemmte Schutzhülse,
- Fig. 7: eine mittels einer Doppel-Speed-Nut an dem Getriebegehäuse gehaltene Schutzhülse,
- Fig. 8: eine Doppel-Speed-Nut,
- Fig. 9: eine Schnittdarstellung einer Schutzhülse mit innen liegender Riffelung,
- Fig. 10: ein vergrößertes Detail aus Fig. 9,
- Fig. 11: eine geschnittene Darstellung eines Befestigungsdoms des Getriebegehäuses mit außen liegender Riffelung und
- Fig. 12: ein Detail aus Fig. 11.

### Ausführungsformen der Erfindung

In den Figuren sind gleiche Bauteile und Bauteile mit gleicher Funktion mit den gleichen Bezugszeichen gekennzeichnet.

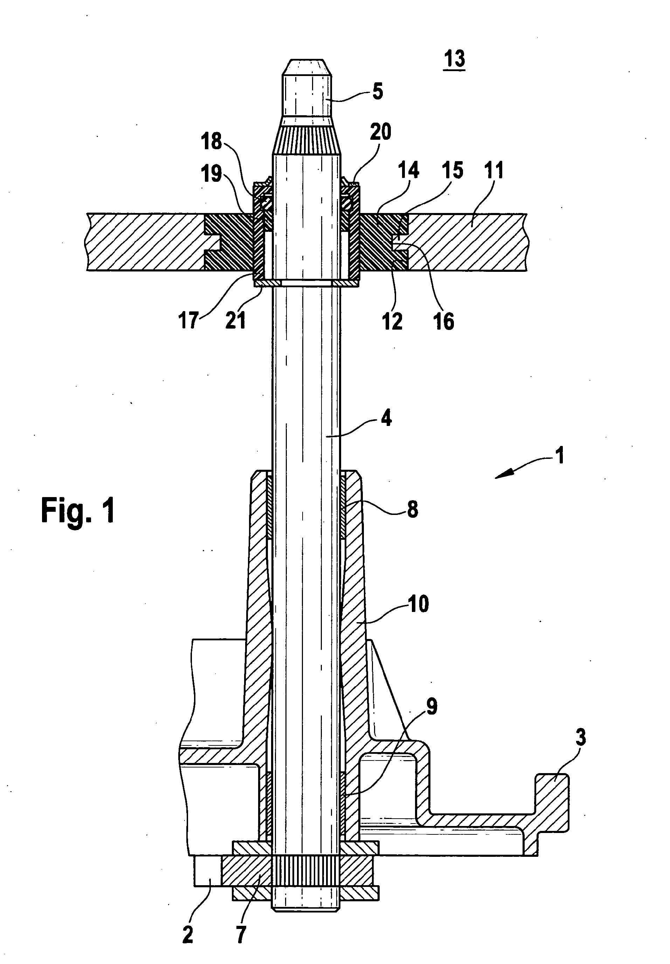

In Fig. 1 ist eine Scheibenwischerantriebsanordnung 1 gezeigt. Diese umfasst einen nicht dargestellten Antriebsmotor, der über eine nicht dargestellte Abtriebswelle mit einem ausschnittsweise dargestellten Getriebe 2 verbunden ist. Das Getriebe 2 ist ein einem ausschnittsweise gezeigten Getriebegehäuse 3 aus Aluminiumguss angeordnet und treibt eine Antriebswelle 4 pendelnd an. An dem freien Ende 5 der Antriebswelle 4 ist ein nicht gezeigter Scheibenwischerarm befestigbar.

Auf der Antriebswelle 4 sitzt getriebeseitig ein Zahnrad 7, welches von einem verzahnten Element des Getriebes 2 angetrieben wird. Die Antriebswelle 4 ist an zwei in axialer Richtung beabstandeten Stellen gelagert. Hierzu sind ein erstes Lager 8 und ein zweites Lager 9 vorgesehen. Das Lager 8 ist in einem Befestigungsdom 10 angeordnet, durch den die Antriebswelle 4 aus dem Getriebegehäuse 3 herausgeführt ist. Mit einem dem Getriebe 2 abgewandten Abschnitt ist die Antriebswelle 4 durch ein Fahrzeugbauteil 11, insbesondere ein Blechteil oder eine Fensterscheibe, herausgeführt. Hierzu ist in dem Fahrzeugbauteil 11 eine Öffnung 12 vorgesehen.

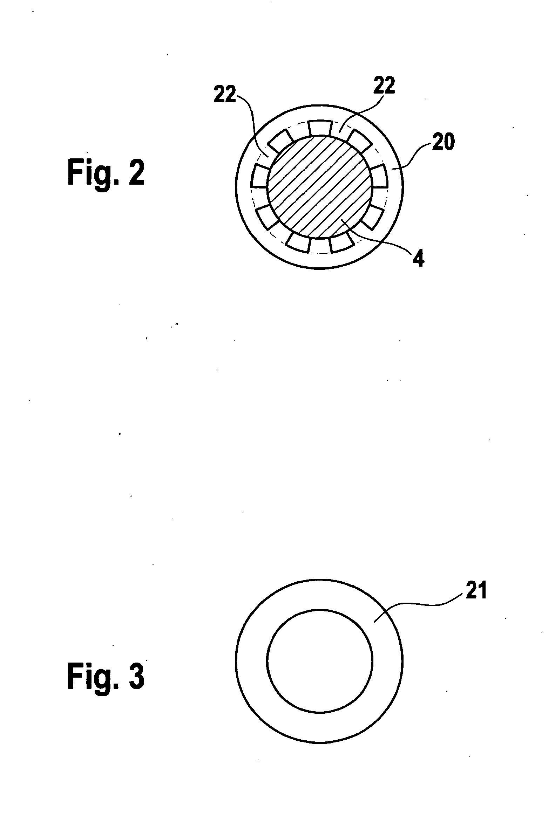

Damit von der Außenseite 13 des Fahrzeugs her kein Wasser durch die Öffnung 12 eindringen kann, ist ein äußeres Dichtelement 14, ein so genanntes Grommet, vorgesehen, das an einem Umfangssteg 15 der Öffnung 12 in dem Fahrzeugbauteil 11 gehalten ist. Hierzu weist das äußere Dichtelement 14 eine zum Umfangssteg formkomplementäre Umfangsnut 16 auf. Das äußere Dichtelement 14 liegt mit seiner radialen Innenseite dichtend an einer Schutzhülse 17 an. Die aus Kunststoff gespritzte Schutzhülse 17 weist eine kreisförmige äußere Querschnittsflächen sowie kreisförmige innere Querschnittsflächen auf. Die Schutzhülse 17 ist zusammen mit der Antriebwelle 4 durch die Öffnung 12 hindurchgeführt und koaxial zu der Antriebswelle 4 angeordnet und umschließt einen axialen Abschnitt der Antriebwelle 4. Die Schutzhülse 17 ist mit einem als 0-Ring ausgebildeten inneren Dichtelement 18 gegenüber der Antriebswelle 4 abgedichtet. Das innere Dichtelement 18 ist in einer Umfangsnut im Innenumfang der Schutzhülse 17 positioniert. In der Zeichnungsebene nach unten hin wird die Nut durch einen Kunststoffring 19 begrenzt, der nach der Montage des inneren Dichtelements 18 mit der Schutzhülse 17 ultraschallverschweißt wurde. Mittels des inneren Dichtelementes 18 wird ein Eindringen von Wasser von der Außenseite 13 her in den Bereich zwischen Schutzhülse 17 und Antriebswelle 4 vermieden, wodurch das Eindringen von Wasser in das Getriebegehäuse 3 verhindert wird. Die Schutzhülse 17 ist zwischen einem ersten Sicherungselement 20 und einem zweiten Sicherungselement 21 in axialer Richtung aufgenommen. Das erste Sicherungselement 20 ist als Speed-Nut ausgebildet und in Fig. 2 im Detail dargestellt. Bei dem zweiten Sicherungselement 21 handelt es sich um einen Sicherungsring, der in einer Umfangsnut der Antriebswelle 4 gehalten ist. Durch das Vorsehen eines Sicherungsrings als zweites Sicherungselement 21 wird die Lage der Schutzhülse 17 exakt definiert. Nach der Montage des Sicherungsrings 21 und dem Aufschieben der Schutzhülse 17 auf die Antriebswelle 4 wird auch die Speed-Nut von dem freien Ende 5 her auf die Antriebswelle 4 aufgeschoben, wobei sich die am Innenumfang vorgesehenen federnden Laschen 22 in Richtung des freien Endes 5 der Antriebswelle 4 aufstellen und sich somit mit der Antriebswelle 4 verspannen bzw. verkrallen und ein Verschieben des ersten Sicherungselements 20 entgegen der Aufschieberichtung, d.h. in Richtung des freien Endes 5 der Antriebwelle 4 verhindern. Es ist möglich, ein geringes Axialspiel zwischen dem ersten Sicherungselement 20 und der Schutzhülse 17 vorzusehen. In diesem Fall wird ein verdrehen der Schutzhülse 17 durch die Reibkraft zwischen der Schutzhülse 17 und dem äußeren Dichtelement 14 verhindert. Die Antriebswelle 4 dreht sich relativ zu der feststehenden Schutzhülse 17 mit ihrem inneren Dichtelement 18. Wird das erste Sicherungselement 20 in axialer Richtung bis unmittelbar an die Stirnseite der Schutzhülse 17 herangeführt, so hängt es von dem Verhältnis der Reibungskräfte zwischen dem äußeren Dichtelement 14 und der Schutzhülse 17 sowie zwischen der Schutzhülse 17 und den Sicherungselementen 20, 21 zueinander ab, ob sich die Schutzhülse 17 zusammen mit der Antriebswelle 4 verdreht und sich relativ zu dem äußeren Dichtelement in Umfangsrichtung bewegt oder ob die Schutzhülse 17 von dem äußeren Dichtelement 14 in ihrer Umfangsposition gehalten wird.

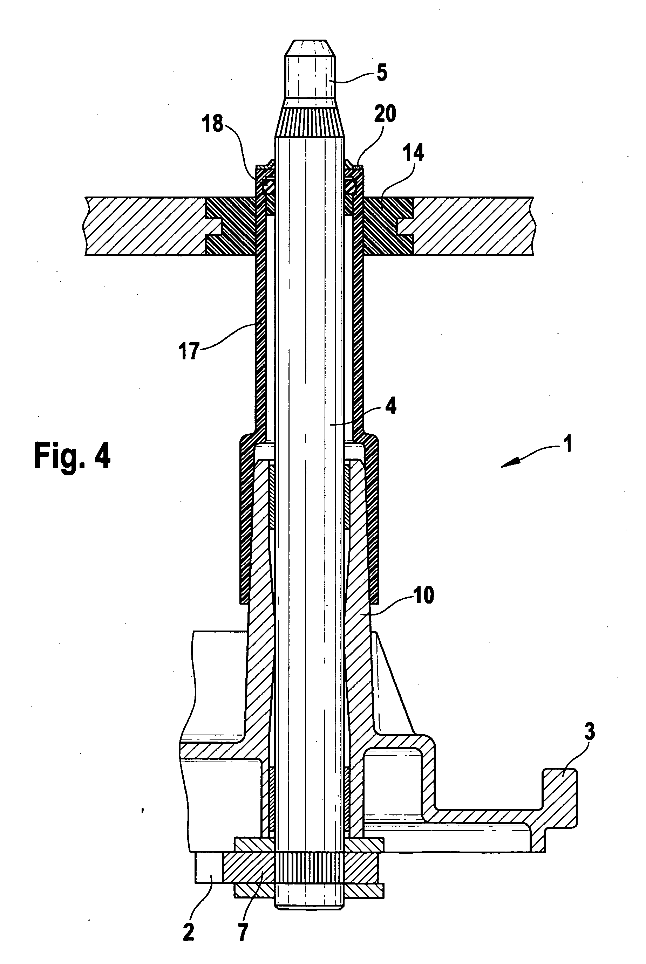

In Fig. 4 ist ein weiteres Beispiel einer Scheibenwischerantriebsanordnung 1 gezeigt. Im Unterschied zu Fig. 1 ist kein zweites Sicherungselement vorgesehen. Mit ihrem in der Zeichnungsebene unteren Ende stützt sich die Schutzhülse 17 an dem Befestigungsdom 10 des Getriebegehäuses 3 ab. Der leicht konisch verlaufende untere Abschnitt der Schutzhülse 17 ist mit dem ebenfalls leicht gegen konisch verlaufenden Befestigungsdom verpresst, so dass eine Axialbewegung sowie eine Bewegung in Umfangsrichtung unterbunden wird. Zusätzlich können weitere Befestigungsmöglichkeiten vorgesehen werden. Sollte sich die Verpressung lösen, so wird eine Axialbewegung der Schutzhülse 17 durch das erste, als Speed-Nut ausgebildete Sicherungselement 20 vermieden, welches sich an der Antriebwelle 4 abstützt.

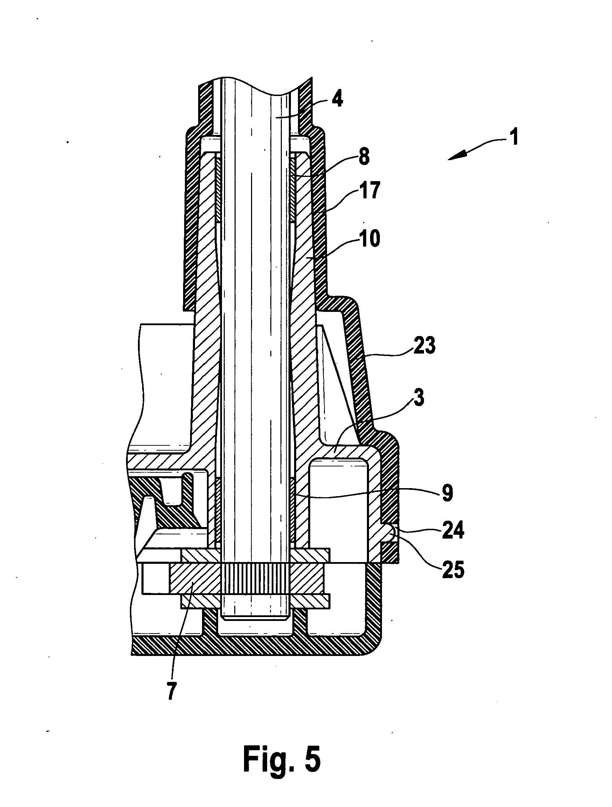

In Fig. 5 ist nur das untere Ende der Schutzhülse 17 dargestellt. Zur Sicherung der Schutzhülse 17 in axialer Richtung ist ein nicht dargestelltes erstes Sicherungselement vorgesehen, das sich an der Antriebswelle 4 abstützt (vgl. Fig. 1 und Fig. 4). Die Schutzhülse 17 ist auf den Befestigungsdom 10 des Getriebegehäuses 3 aufgeschoben und mit einem Rastarm 23 versehen, der quer zur Längserstreckung der Schutzhülse 17 federnd ausgebildet ist und mit einer Ausnehmung 24 eine Rastnase 25 des Getriebegehäuses 3 aus Aluminium umgreift

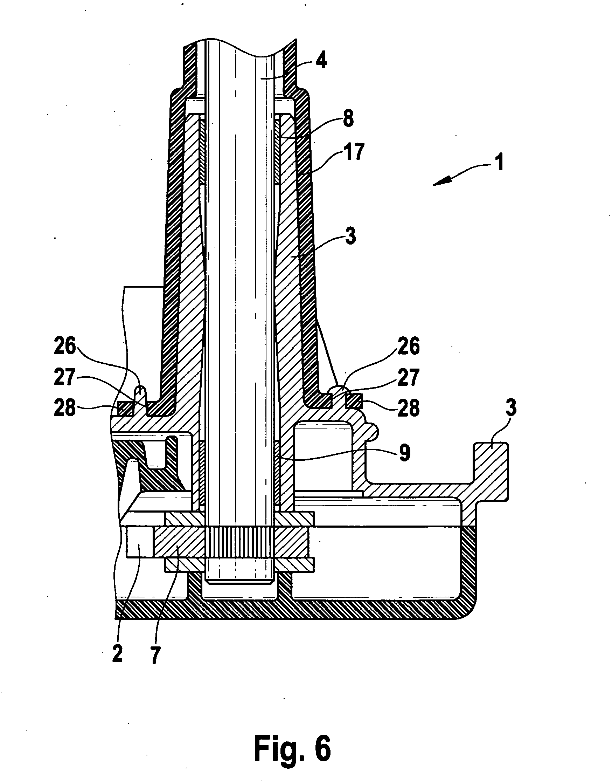

In Fig. 6 ist eine weitere nicht beanspruchte Befestigungsmöglichkeit der Schutzhülse 17 an dem Getriebegehäuse 3 gezeigt. Zwei Fortsätze 26 des Getriebegehäuses 3 sind durch zwei Öffnungen 27 in zwei sich quer zur Längserstreckung erstreckenden und diametral gegenüberliegenden Befestigungslaschen 28 geführt. Der in der Zeichnungsebene rechte Fortsatz 26 ist durch Hammerschlag verstemmt, derart, dass ein Kopf ausgebildet ist, dessen Breite ein Durchgleiten durch die Öffnung 27 verhindert. In der linken Zeichnungshälfte ist der Fortsatz 26 in noch unverstemmtem Zustand gezeigt. Alternativ können auch separate Niete zur Befestigung des Schutzhülse 17 und damit zur Sicherung gegen ein axiales Verschieben und/oder gegen ein Verdrehen der Schutzhülse 17 vorgesehen werden.

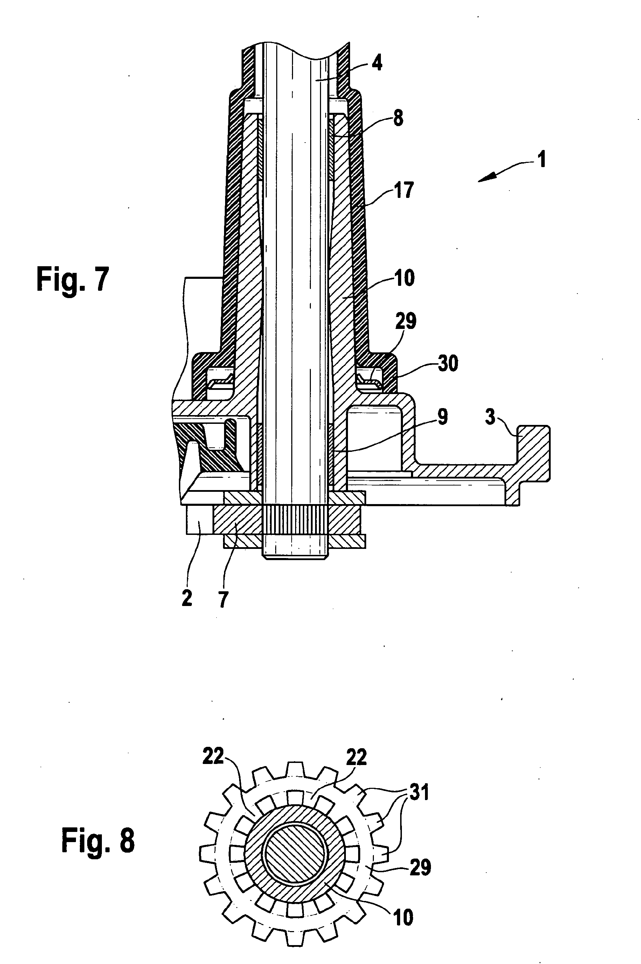

In Fig. 7 ist die Schutzhülse mittels einer in Fig. 8 dargestellten Doppel-Speed-Nut 29 an dem Getriebegehäuse 3 festgelegt. Hierzu weist die im Wesentlichen rotationssymmetrische Schutzhülse 17 einen radial verbreiterten unteren Absatz 30 auf. Mit dem Innenumfang dieses Absatzes 30 sind am Außenumfang verteilte Laschen bzw. Krallen 31 der Doppel-Speed-Nut 29 verkrallt. Mit inneren Laschen 22 ist die Doppel-Speed-Nut 29 mit dem Befestigungsdom 10 verspannt. Die inneren Laschen 22 weisen dabei in Richtung freiem Ende 5 der Antriebswelle 4 und die äußeren Laschen 31 weisen in entgegengesetzte Richtung, in der Zeichnungsebene nach unten, wodurch ein axiales Verschieben der Schutzhülse 17 vermieden wird. Erfindungsgemäß ist die Schutzhülse 17 durch ein nicht dargestelltes, sich and er Antriebswelle 4 abstützendes Sicherungselement in axialer Richtung gesichert.

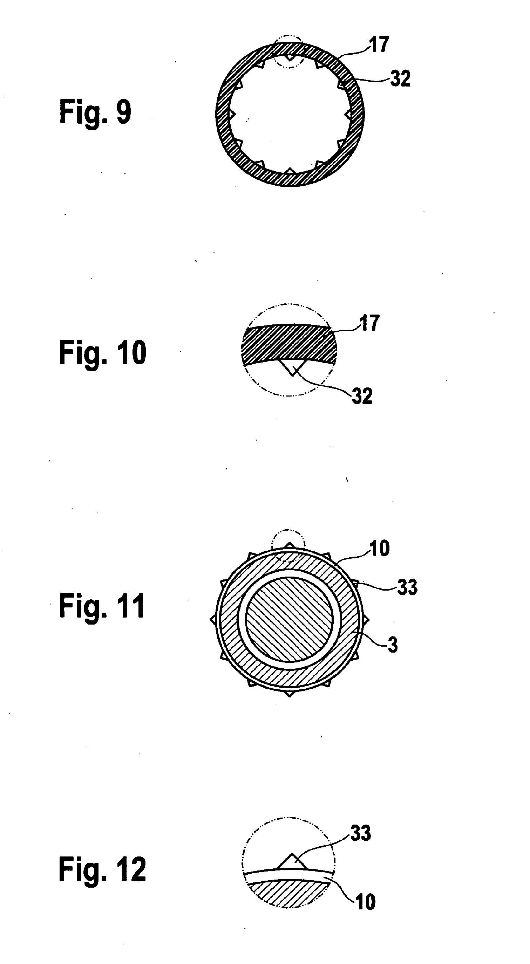

Eine weitere nicht beanspruchte Befestigungsmöglichkeit der Schutzhülse 17 an dem Getriebegehäuse 3 bzw. dem Befestigungsdom 10 ist in den Fig. 9 bis 12 gezeigt. Fig. 9 zeigt am Innenumfang der Schutzhülse 17 vorgesehene, in Umfangsrichtung beabstandete und in axialer Richtung verlaufende Zähne 32. Diese bilden einen Formschluss mit radial äußeren Zähnen 33 des Befestigungsdoms 10 (s. Fig. 11 und 12). Durch die Freiräume zwischen den Zähnen 32, 33 kann eventuell eindringendes Wasser axial abfließen. Alternativ dazu ist es denkbar, dass die Zähne 32 und/oder 33 in entsprechender formkomplementäre Einkerbungen in dem Befestigungsdom 10 bzw. in der Schutzhülse 17 eingreifen.

## Patentansprüche

1. Scheibenwischerantriebsanordnung mit einer Antriebswelle (4) für einen Scheibenwischer, wobei die Antriebswelle (4) durch eine Schutzhülse (17) axial hindurchgeführt ist, die mit mindestens einem inneren Dichtelement (18) gegenüber der Antriebswelle (4) und mit mindestens einem äußeren Dichtelement (14) gegenüber einem Fahrzeugbauteil (11) abgedichtet ist,
wobei mindestens ein an der Antriebswelle (4) gehaltenes erstes Sicherungselement (20, 21) zur Vermeidung oder Begrenzung der axialen Verschiebbarkeit der Schutzhülse (17) relativ zu der Antriebswelle (4) vorgesehen ist, und die Schutzhülse (17) gegen ein Verdrehen gesichert ist
**dadurch gekennzeichnet,**
**dass** die Schutzhülse (17) kraft- und/oder formschlüssig und in dem dem ersten Sicherungselement (20, 21) gegenüberliegenden Bereich mittels eines separaten Fixierelements (29) mit dem Getriebegehäuse (3) verbunden ist.

2. Scheibenwischerantriebsanordnung nach Anspruch 1,
**dadurch gekennzeichnet,**
**dass** das Sicherungselement (20, 21) als Speed-Nut oder Sicherungsring, vorzugsweise Sprengring, ausgebildet ist.

3. Scheibenwischerantriebsanordnung nach einem der Ansprüche 1 oder 2,
**dadurch gekennzeichnet,**
**dass** die Schutzhülse (17) zwischen dem ersten und einem in axialer Richtung beabstandeten zweiten Sicherungselement (20, 21) angeordnet ist.

4. Scheibenwischerantriebsanordnung Anspruch 3,
**dadurch gekennzeichnet,**
**dass** das zweite Sicherungselement (21) als, vorzugsweise in einer Umfangsnut der Antriebswelle gehaltener, Sicherungsring, insbesondere Sprengring, ausgebildet ist.

5. Scheibenwischerantriebsanordnung nach Anspruch 3 oder 4,
**dadurch gekennzeichnet,**
**dass** die beiden Sicherungselemente (20, 21) die Schutzhülse (17) axial klemmend zwischen sich aufnehmen.

6. Scheibenwischerantriebsanordnung Anspruch 3 oder 4,
**dadurch gekennzeichnet,**
**dass** ein Axialspiel zwischen mindestens einem der Sicherungselement (20, 21) und der Schutzhülse (17), vorzugsweise kleiner als 1 mm, vorgesehen ist.

7. Scheibenwischerantriebsanordnung nach einem der Ansprüche 1 bis 4,
**dadurch gekennzeichnet,**
**dass** die Schutzhülse (17) axial an dem Getriebegehäuse (3), insbesondere an einem Befestigungsdom (10) des Getriebegehäuses (3), abstützend angeordnet ist.

8. Scheibenwischerantriebsanordnung nach einem der vorhergehenden Ansprüche,
**dadurch gekennzeichnet,**
**dass** die Schutzhülse (17) mit dem Getriebegehäuse (3) verzahnt, und/oder verrastet, und/oder verstemmt, und/oder vernietet und/oder auf das Getriebegehäuse aufgepresst und/oder mittels einer Doppel-Speed-Nut (29) an dem Getriebegehäuse (3) gehalten ist.

## Claims

1. Windscreen wiper drive assembly with a drive shaft (4) for a windscreen wiper, wherein the drive shaft (4) is guided axially through a protective sleeve (17) which is sealed off from the drive shaft (4) by at least one inner sealing element (18) and from a vehicle component (11) by at least one outer sealing element (14), wherein at least one first securing element (20, 21) which is held on the drive shaft (4) is provided for avoiding or limiting the axial displaceability of the protective sleeve (17) relative to the drive shaft (4), and the protective sleeve (17) is secured against rotation, **characterized in that** the protective sleeve (17) is connected to the gear housing (3) in a frictional and/or form-fitting manner and in the region opposite the first securing element (20, 21) by means of a separate fixing element (29).

2. Windscreen wiper drive assembly according to Claim 1, **characterized in that** the securing element (20, 21) is designed as a speed nut or securing ring, preferably a snap ring.

3. Windscreen wiper drive assembly according to either of Claims 1 and 2, **characterized in that** the protective sleeve (17) is arranged between the first and a second securing element (20, 21), which is spaced apart in the axial direction.

4. Windscreen wiper drive assembly according to Claim 3, **characterized in that** the second securing element (21) is designed as a securing ring, in particular a snap ring, which is preferably held in a circumferential groove of the drive shaft.

5. Windscreen wiper drive assembly according to Claim 3 or 4, **characterized in that** the two securing elements (20, 21) hold the protective sleeve (17) in an axially clamping manner therebetween.

6. Windscreen wiper drive assembly according to Claim 3 or 4, **characterized in that** an axial clearance, preferably of smaller than 1 mm, is provided between at least one of the securing elements (20, 21) and the protective sleeve (17).

7. Windscreen wiper drive assembly according to one of Claims 1 to 4, **characterized in that** the protective sleeve (17) is arranged so as to be supported axially on the gear housing (3), in particular on a fastening dome (10) of the gear housing (3).

8. Windscreen wiper drive assembly according to one of the preceding claims, **characterized in that** the protective sleeve (17) is meshed, and/or latched, and/or caulked, and/or riveted to the gear housing (3), and/or is pressed onto the gear housing, and/or is held on the gear housing (3) by means of a double speed nut (29).

## Revendications

1. Dispositif d'entraînement d'essuie-glace comprenant un arbre d'entraînement (4) pour un essuie-glace, l'arbre d'entraînement (4) étant guidé axialement à travers un manchon de protection (17) qui est rendu étanche par au moins un élément d'étanchéité interne (18) par rapport à l'arbre d'entraînement (4) et par au moins un élément d'étanchéité externe (14) par rapport à un composant du véhicule (11), au moins un premier élément de fixation (20, 21) maintenu sur l'arbre d'entraînement (4) étant prévu pour éviter ou limiter le mouvement axial du manchon de protection (17) par rapport à l'arbre d'entraînement (4), et le manchon de protection (17) étant protégé contre toute rotation,
**caractérisé en ce que**
le manchon de protection (17) est connecté au boîtier du mécanisme (3) par engagement par force et/ou par coopération de forme et dans la région opposée au premier élément de fixation (20, 21), au moyen d'un élément de fixation séparé (29).

2. Dispositif d'entraînement d'essuie-glace selon la revendication 1,
**caractérisé en ce que**
l'élément de fixation (20, 21) est réalisé sous forme d'écrou rapide ou de bague de fixation, de préférence de jonc.

3. Dispositif d'entraînement d'essuie-glace selon l'une quelconque des revendications 1 ou 2,
**caractérisé en ce que**
le manchon de protection (17) est disposé entre le premier élément de fixation et un deuxième élément de fixation (20, 21) espacé de celui-ci dans la direction axiale.

4. Dispositif d'entraînement d'essuie-glace selon la revendication 3,
**caractérisé en ce que**
le deuxième élément de fixation (21) est réalisé sous forme de bague de fixation, notamment de jonc, maintenu(e) dans une rainure périphérique de l'arbre d'entraînement.

5. Dispositif d'entraînement d'essuie-glace selon la revendication 3 ou 4,
**caractérisé en ce que**
les deux éléments de fixation (20, 21) reçoivent entre eux le manchon de protection (17) par serrage axial.

6. Dispositif d'entraînement d'essuie-glace selon la revendication 3 ou 4,
**caractérisé en ce**
**qu'**un jeu axial est prévu entre au moins l'un des éléments de fixation (20, 21) et le manchon de protection (17), lequel est de préférence inférieur à 1 mm.

7. Dispositif d'entraînement d'essuie-glace selon l'une quelconque des revendications 1 à 4,
**caractérisé en ce que**
le manchon de protection (17) est disposé en s'appuyant axialement contre le boîtier du mécanisme (3), notamment contre un dôme de fixation (10) du boîtier du mécanisme (3).

8. Dispositif d'entraînement d'essuie-glace selon l'une quelconque des revendications précédentes,
**caractérisé en ce que**
le manchon de protection (17) est engrené et/ou encliqueté et/ou maté et/ou riveté avec le boîtier du mécanisme (3) et/ou pressé sur celui-ci, et/ou est maintenu contre le boîtier du mécanisme (3) au moyen d'un double écrou rapide (29).
